# EUROPEAN PATENT APPLICATION

(11) **EP 3 076 315 A1**
(43) Date of publication of application: **05.10.2016**
(21) Application number: 14866464.2
(22) Date of filing: 24.11.2014
(51) Int. Cl.: G06F 17/50

(54) **METHOD FOR PLANNING DENTAL TREATMENT**

(30) Priority: 29.11.2013 ES 201331742
(71) Applicant: Dentalliance Network S.L., 28933 Móstoles (Madrid) (ES)
(72) Inventor: ALVAREZ GARCIA, José, E-28933 Móstoles (Madrid) (ES); CABANAS, George Ernest, E-28933 Móstoles (Madrid) (ES)
(74) Representative: Urizar Anasagasti, Jesus Maria
(86) International application number: PCT/ES2014/070864
(87) International publication number: WO 2015/079086

(57) **Abstract**

Method for planning dental treatment which includes collecting data and images of the initial situation, creating an initial 3D model, studying the initial situation, analyzing the smile and planning in a center, all by means of software, creating and producing an envisaged final 3D model, creating a negative of the envisaged final model, creating in-situ a provisional prosthesis (mock-up) on the teeth of the patient which represents the final result which would be left after the treatment, reviewing the result and collecting photographs and video of the envisaged result and producing the required prosthesis, implant or brace elements from the digital data.

## Description

### OBJECT OF THE INVENTION

The object of the present invention is a novel method for planning dental treatment.

The method identifies all the steps to be followed in order to plan the dental treatment, using digital systems and in which a physical model of the envisaged final result is going to be produced, irrespective of whether orthodontics, periodontics, implants and surgery or prostheses is required.

The planning is universal for any type of dental treatment and includes the diagnosis and analysis in a center where specialists from each discipline can analyze the viability of the treatment from an aesthetic, technical, medical and anatomical point of view and, once this viability has been checked, all the devices and products required for carrying out the planned treatment can be provided to the odontologist, surgeon, periodontist and to the orthodontist.

The viability of the treatment can be checked because the specialists can see a virtual simulation in space and time of the different phases of the entire treatment when the data of the initial situation is processed digitally and by means of suitable software.

Similarly, planning using digital methods allows the immediate production of the required products and devices, once the treatment has been accepted by the patient. This is possible due to the fact that prior to presenting the treatment plan, the viability of the same has been studied by the specialists and the devices and products required to carry it out have been decided.

This planning method includes, in one of the phases thereof, the creation of a physical model of the final result of the treatment from the digitalized data processed by a software program and the placement thereof in the mouth of the patient so that they can physically see the final result.

The method can provide the patient with a complete pack with the universal information for the entire treatment which includes a reproduction of the final result, complemented by the placement of the physical model of the final result and with the times and envisaged phases of the planned treatment.

This invention has particular application in the odontological sector and in orthodontics clinics where a standardized model with these characteristics is required to optimize the result of the treatment.

### BACKGROUND OF THE INVENTION

To date, various types of processes and methods related to dental treatments have been known in the current state of the art.

More specifically, the patent WO2012007615 relating to a method for planning a dental implant can be cited, in which reference is made only to a specific type of dental treatment, referring to dental implants and the manner of planning the production of this implant.

The document US 2010076581 A1 describes a method and system for providing a personalized dental restoration and creating a prosthesis, using a specialized computer program. In this system, digital photographs of the patient are collected which are transferred to a computer program. Using these photographs as a basis, the program makes certain calculations required for carrying out the treatment. The program asks the dental professional to select the desired materials and the structure of the prosthesis. Based on this selection, the program automatically produces a three-dimensional design suitable for the teeth. The digital design is sent to a dental laboratory for the effective production of the personalized prosthesis.

The document EP 1568335 A2 claims a method and a system for producing dental prostheses. It consists of providing a virtual model of an intraoral cavity, initializing the entire process of collecting data from the patient in a dental clinic. The design and production of the dental prosthesis suitable for the intraoral cavity of the patient is shared between a dental laboratory and a service center for digitalizing the data and creating the model in three dimensions.

The document US 2013085591 relates to a method for forming a physical or virtual dental model as an aid for producing a dental prosthesis taking into account the shape of at least one stump present in an upper or lower jaw, the points of contact with the teeth adjacent to the stump and of the occlusal surface of at least one opposed tooth in the region of the field of movement of the dental prosthesis, using digital data relating to the upper and lower part of the jaw. The production of said dental model requires collecting photographs of the patient and the processing of the information collected by means of a computer program.

As closer background and in which reference is made to the planning of dental treatment, we have document EP 1935369 relating to a method for planning dental treatments. In this patent, the different steps for obtaining information regarding the situation of the patient and the design of a virtual model of the result to be obtained as well as the subsequent review of the virtual prototype obtained are described.

In none of these inventions is reference made to the production of a physical model, and not a virtual one, of the result based on the data processed using the software and they do not allow the patient to see the result of the treatment other than in virtual simulations and not in their own mouth. This prevents the real aesthetic impact on the face of the patient as well as the result of the bite and the occlusion being seen when it is a virtual prototype, preventing corrections being made.

### DESCRIPTION OF THE INVENTION

In order to palliate or, where appropriate, eliminate all the problems mentioned above, this novel method for planning dental treatment, object of the present invention, is presented.

The novelty of the method presented in this patent is based on the fact that the physical model of the envisaged final result is designed and produced using digital systems and software, said model is transferred to the mouth of the patient by means of molds and resins, thus testing the result. Once the result has been tested and checked, the entire treatment is also planned by digital methods which allows elements and instruments to be produced such as guides, aligners which help the professional to carry out the treatment as has been envisaged.

In general terms, the invention proposes a method which comprises obtaining information regarding the situation of the patient prior to the treatment and creating a virtual model of the initial situation for the study thereof by the specialists from each discipline and subsequently obtaining a virtual model of the viable result to be obtained via software, from which a physical model (mock-up) adapted to the mouth in the initial situation is going to be created and which represents the final model to be obtained after the treatment.

This allows the patient to be able to see using this physical model (mock-up), which simulates the final result placed in their mouth, and thus to be able to analyze in a real way the aesthetic impact on the face as well as on the bite and the occlusion. The placement of the physical model in the mouth of the patient allows it to be seen whether corrections are required which are made in a simple manner by the software program.

The method is initiated by obtaining data on the original situation, consisting of different photographs, videos, molds, radiographies or scans which allow initial [data] of the patient to be obtained and to transfer them to a software which creates a 3D model of this situation.

Then, this information is forwarded to a center where, in-situ or online and by means of the use of the software program, an analysis is carried out to create a virtual model of the objective which is intended to be obtained. In this phase, an analysis of the smile is carried out in order to take it into account in the virtual model to be obtained as well as an analysis of the technical possibilities of obtaining this result as a function of the limitation of space, bone, etc. or of anatomical impediments. A virtual model of the objective to be obtained, which is viable in practice, is created. In the center which receives this information, all the specialists from each discipline can universally analyze the case and this is done with the aid of the software, the simulation of treatment to be carried out and the elements, products and actions required in each phase envisaged by the odontologist, surgeon, prosthetist, periodontist and the orthodontist and the viability of the same is going to be assessed from the points of view of these specialists.

One of the principal advantages of this method is that even though the patient attends the clinic and is going to be seen by a general odontologist, the digitalized information collected is going to be able to be studied universally by the team of specialists when this information is forwarded to the center which may be a physical or virtual center accessible online where these specialists can assess the needs in the case of each of their specialties. This means that, for example, if the patient is going to require prior analysis of the smile in the orthodontics treatment and the placement of implants together with the prosthesis, the information received in this center allows an orthodontic specialist to analyze the anatomical and technical possibilities of moving certain dental pieces and simultaneously, the prosthetic surgeon studies the possibilities of placing the implants required for obtaining the result which is intended to be obtained.

In this phase of assessing the viability of the model to be obtained, due to the fact that it is carried out based on digital systems and software, the different phases of the treatment are also going to be designed and the elements required for carrying them out are determined.

Once the viable virtual model is obtained by means of the software and taking into account the medical and prosthetic aspects, this virtual model is produced by means of 3D printing in order to obtain a positive physical model of the envisaged situation of the patient at the end of the treatment.

Via this positive model with final situation of the patient the negative of the envisaged final model is obtained by means of using thermoplastic and by thermoforming or any other technique, consisting of a cover, mold or plastic mask adapted to the situation which the teeth would be in after the treatment. This mask, mold or cover with the negative of the final model, is already filled, in the clinic itself, with a resin, composite or any other material for obtaining a provisional covering and is placed over the teeth of the patient in such a way that once the resin or composite has set, and this cover or mask is removed, the physical model, which was previously virtual and which now is a provisional prosthesis (mock-up), remains in place on the teeth.

The odontologist's tools are used to eliminate the leftover resin or composite, so that the patient can see their teeth, and on them a provisional prosthesis (mock-up) that represents the situation of their teeth after the planned treatment. This makes it possible to see how the treatment affects the position of the lips and the face, as well as how it affects the bite and occlusion, but in real life, not virtually.

This preparation of the provisional prosthesis (mock-up) is carried out based on the data provided by the software program on the final envisaged result, as opposed to other cases in which this provisional prosthesis (mock-up) could be manually produced in the prosthesis laboratory from a mold of the initial situation, manually molding the desired result thereupon in an artisanal fashion.

A series of photos and videos of the patient with this provisional prosthesis (mock-up) are collected and optionally digitally processed so that the patient can see the result most similar to the envisaged final situation.

One of the problems in dental treatment is the time which it takes to produce the elements required for carrying it out and, using this method, it is reduced substantially since, during the planning in the virtual simulation, it has already been determined and decided what elements to use and the characteristics thereof and they can begin to be produced once the treatment has been accepted.

Another problem in dental treatments is that the patient cannot see in advance what the result is going to be after the treatment which is usually uncomfortable and sometimes also lengthy. Using this method, the patient can observe and physically experience what their smile, mouth and teeth will be like after the treatment and not in a virtual manner.

The creation of this provisional prosthesis (mock-up) from the envisaged final model, which the software program provides, also allows the deviations or the aspects of the result which are not to the satisfaction of the patient to be corrected, correcting these deviations or defects in a simple manner in the software program itself which provides the envisaged final model.

Another advantage of the present method is that the plastic mask obtained by thermoforming or by any other technique with the negative of the envisaged final situation serves other purposes such as facilitating the odontologist in producing provisional veneers, crowns or prostheses since it has a physical negative mold. Since it has the negative mold, the veneers can be created with suitable thickness or the crowns with the correct exterior shape since it can be used as a probe guide when it is necessary to file part of a dental piece.

The method allows, based on simple photographs collected with a cellphone during a first visit to the clinic, to send said photographs to the diagnostic and planning center which, in one quick preliminary analysis, can indicate to the clinic that the treatment is possible and the actions that are going to be required such as orthodontics, surgery, periodontics, implants, prosthesis, etc., creating a first basic plan which can then be completed with the entirety of the phases of the method described here.

### DESCRIPTION OF THE DRAWINGS

In order to complement the description and with the aim of aiding a better understanding of the characteristics of the invention, a series of figures accompany the present specification as an integral part of the same, in which, in an illustrative and non-limiting manner, the following has been depicted:

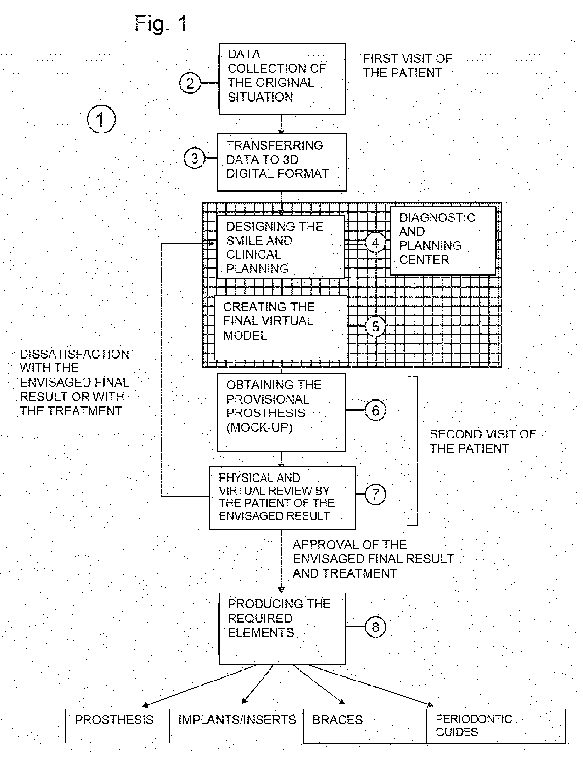

Figure 1: shows a general diagram with the different steps of the method described in the patent.

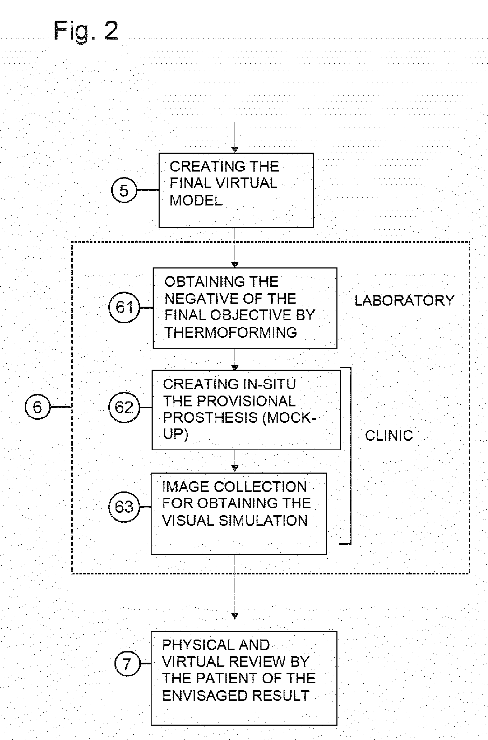

Figure 2: shows a detail of the steps to be followed in order to obtain this provisional prosthesis (mock-up) in-situ.

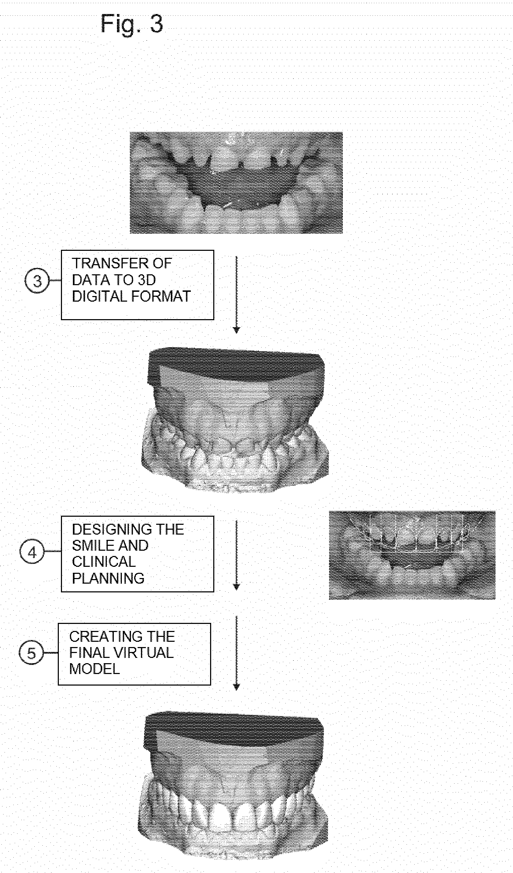

Figure 3: shows an image of the mouth, the same mouth after transferring the data to a 3D digital format (3) and lastly the digital simulation envisaged for the end of the treatment after the design of the smile and the clinical planning (4) (with an image of the design of the smile to the right thereof) and of the creation (5) of the final virtual model.
Figure 4: shows an image of the negative obtained by thermoforming or by any other technique based on the envisaged final model produced by 3D printing or by any other technique.

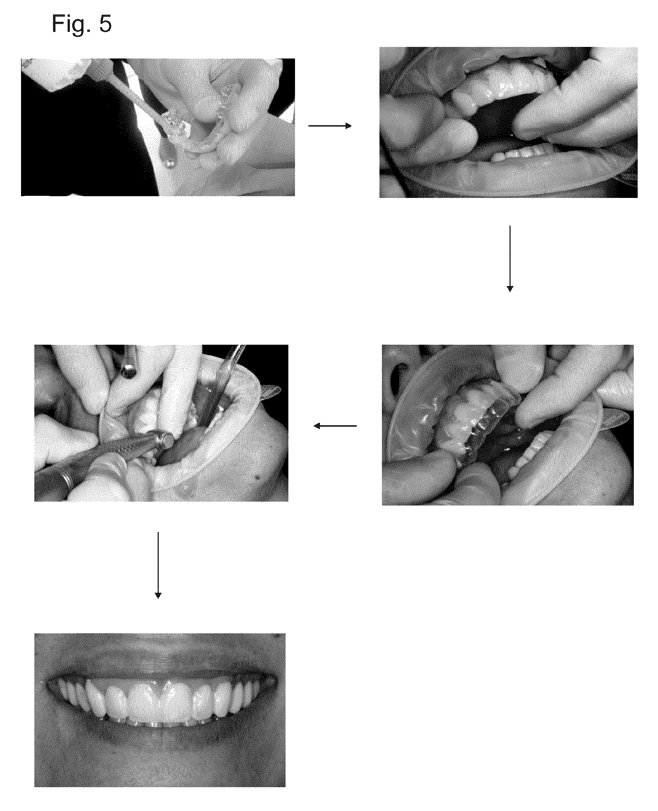

Figure 5: shows the different actions which are already carried out in the clinic, filling the negative of the final model with resin, the placement thereof in the mouth of the patient, removal from the mouth once it has set, altering, eliminating the residues and an image of the mouth with the provisional prosthesis placed.

### PREFERRED EMBODIMENT OF THE INVENTION

As can be observed in the attached figures, the method (1) for planning dental treatment is composed of various, clearly defined stages;

Step 1- obtaining the information and different images, videos, radiographies, scans, etc. regarding the situation of the patient prior to the treatment (2).

Step 2- the data obtained are transferred by means of computer software to a format in order to be digitally processed and to be able to obtain a 3D model of the initial situation (3).

Step 3- by means of the universal analysis by the health personnel and the prosthetist, an analysis of the smile (4) is carried out, visualizing both the face and the teeth by means of using software in order to take into account the virtual model to be obtained as well as clinical planning of the technical and medical possibilities of obtaining this envisaged final result as a function of the limitation of space, bone, etc. or of anatomical impediments.

This phase is carried out in a diagnostic and planning center which can be a physical or virtual center accessible online and allows a group of specialists in each one of the fields required for the treatment to be able to carry out a diagnosis of the initial situation in order to then carry out an analysis of viability of the actions based on the initial data, together with a virtual simulation of the different phases, at the same time as the elements required for carrying it out are determined and the functional and production viability of these elements which help to guarantee the previously designed envisaged final result such as aligners, braces positioners for the orthodontics part of the treatment; surgical guides for the implant part of the treatment; or digital diagnostic wax-ups for the part of the treatment for selectively carving prostheses. All these elements are designed by a computer, starting from the envisaged final result.

Step 4- the viable virtual model of the objective to be obtained at the end of the treatment is created (5) using the computer software and by 3D printing or any other technique which the physical model allows.

Step 5- the creation of the provisional prosthesis (mock-up) which physically simulates the final result (6) and the physical review by the patient of the result with the provisional prosthesis (mock-up) in place and of the images previously collected (7).

This creation of the provisional prosthesis (mock-up) consists of two stages which are carried out in the laboratory and in-situ in the clinic itself.

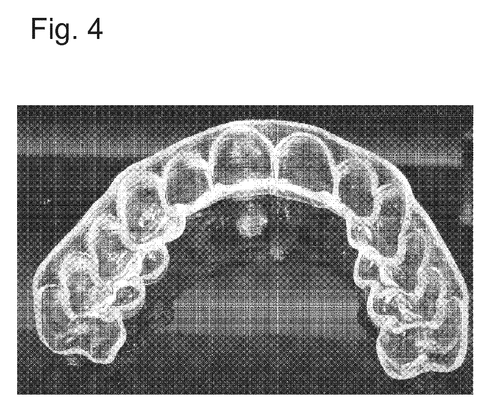

One phase in the laboratory and the negative of the final model (61) is going to be obtained via this plastic model with the final situation of the patient by means of using plastic and by thermoforming or any other technique. We are going to obtain a plastic cover or mask (Fig. 4) adapted to the situation which the teeth would be in after the treatment.

This mask, mold or cover with the negative of the final model is already filled, in the clinic itself, with a resin, composite or any other material for obtaining a provisional covering and it is going to be placed over the teeth of the patient in such a way that once the resin or composite has set, and this cover, mold or mask is removed, the physical model, which was previously virtual and which now is a provisional prosthesis (mock-up) (62) remains in place on the teeth and the filler residues are removed.

Photos and videos with this provisional prosthesis (mock-up) in place are collected which can be digitally processed so that the patient can see the result most similar to the envisaged final situation (63).

The deviations from the envisaged final objective or the dissatisfaction of the patient with the result is transferred to the software program in order to be corrected.

Step 6- production of the elements required for the treatment (8), subject to the acceptance of the same by the patient based on the initial situation and the final proposed model using the digital information available analyzed using the software program.

With the nature of the present invention sufficiently described as well as ways to carry it out in practice, all that remains to be added is that said invention may undergo certain variations in the form and materials thereof, provided said alterations do not substantially vary the characteristics which are claimed below.

## Claims

1. A method for planning dental treatment (1) with image collection (2) and processing thereof in a software program in order to obtain a 3D virtual model, the analysis and diagnosis thereof (4), the creation of a 3D virtual model of what the envisaged final result (5) will be and the physical production thereof by means of 3D printing, **characterized in that** based on the mold produced of this envisaged final result, a provisional prosthesis (mock-up) is created in the mouth of the patient which physically simulates the final result (6) and the image collection with the provisional prosthesis (mock-up) in place is carried out and a physical review by the patient of the envisaged final result with the provisional prosthesis (mock-up) in place and of the previously collected images (7) is carried out.

2. The method for planning dental treatment according to claim 1, **characterized in that** the creation of the provisional prosthesis (mock-up) consists of two stages which are carried in a laboratory and in-situ in the clinic itself, and which are the following:
- One phase in the laboratory using the physical mold produced from the 3D model with the final situation of the patient, wherein a cover, mold or mask with the negative of the envisaged final model (61) is obtained by means of using plastic and by thermoforming.
- A second phase, in the clinic, in which this mask, mold or cover with the negative of the final model is going to be filled with a resin, composite or any other material for obtaining a provisional covering, it is placed over the teeth of the patient and once the resin or composite has set, this cover, mold or mask is removed and the resin residues are removed, the physical model, which was previously virtual and which now is a provisional prosthesis (mock-up) (62) remains in place on the teeth and photographs and video with this provisional prosthesis (mock-up) in place are collected, which are digitally processed (63).

3. The method for planning dental treatment according to claim 2, **characterized in that** the creation of the cover, mold or mask with the negative of the final model is obtained by any other technique different from thermoforming.

4. The method for planning dental treatment according to claim 1, **characterized in that** the analysis in the diagnostic center uses digital systems and includes an analysis of the initial situation of the dental state of the patient and analysis of the smile, visualizing both the face and the teeth in order to take it into account in the virtual model to be obtained, and to carry out planning of the technical and medical possibilities to be carried out in order to obtain this envisaged final result, taking into consideration and as a function of the limitation of space, bone or anatomical impediments as well as the viability of producing the required elements which are designed by a computer, starting from the envisaged final result and which help to guarantee the previously designed envisaged final result, such as aligners, braces positioners for the orthodontics part of the treatment; surgical guides for the implant part of the treatment; or digital diagnostic wax-ups for the part of the treatment for selectively carving prostheses.
